# EUROPEAN PATENT APPLICATION

(11) **EP 1 867 842 A1**
(43) Date of publication of application: **19.12.2007**
(21) Application number: 06012061.5
(22) Date of filing: 12.06.2006
(51) Int. Cl.: F01D 17/24, F01D 25/00, F01D 9/04, F23D 11/32, F02C 7/30

(54) **A gas turbine engine and a method of operating a gas turbine engine**

(71) Applicant: SIEMENS AKTIENGESELLSCHAFT, 80333 München (DE)
(72) Inventor: Wilbraham, Nigel, Stourbridge West Midlands (GB)

(57) **Abstract**

A gas turbine engine comprises a combustor, a nozzle guide vane assembly. The combustor includes a burner (11), a swirler assembly (12), and a combustion chamber (13, 14). The nozzle guide vane assembly comprises a plurality of nozzle guide vanes (20). Further, the gas turbine engine comprises a charging means (22) connected to the nozzle guide vanes (20) and adapted to selectively electrostically charge the nozzle guide vanes (20) at a pre-determined polarity. In a method of operating a gas turbine engine, fuel and air are introduced in the combustion chamber (13, 14) by the swirler assembly (12), and the nozzle guide vanes (20) are charged electrostatically at a pre-determined polarity.

## Description

The present invention relates to a gas turbine engine and a method of operating a gas turbine engine.

The operation of any gas turbine engine results in the degradation of turbine components due to their exposure to hot and corrosive exhaust gases. The life and the strength of these components are therefore limited. As a consequence, the turbine components need to be removed from machines to be refurbished after a certain operation time. This means that the machine has to be taken out of service for the refurbishment. Therefore, a refurbishment is expensive and disruptive to the operation of the machine.

In particular, gas turbine engines using a high swirl for mixing fuel and air are prone to create a flow in the combustor that manifests itself as a high temperature vortex in the exhaust gas. This vortex can attach itself to the 1^{st} stage nozzle guide vanes (NGV's) or CT-1 nozzle of the gas turbine engine. The problem with this aero-thermal feature is that it can lead to excessively high temperatures that are localised to the point of attachment of the vortex, leading to shortened operating times before a refurbishment is needed. In other words, the hot vortex core is limiting the life of the 1^{st} stage NGV's. To counter this issue, TBC coatings and re-distributed cooling air are used. However, these measures are expensive.

An objective of the present invention is therefore to provide a gas turbine engine and a method of operating a gas turbine engine reducing the problems linked to the high temperature vortex.

This objective is solved by a gas turbine engine according to claim 1 and a method according to claim 5. The dependent claims describe advantageous developments of the invention.

An inventive gas turbine engine comprises a combustor and a nozzle guide vane assembly. The combustor includes a burner, a swirler assembly and a combustion chamber. The nozzle guide vane assembly comprises a plurality of nozzle guide vanes. In addition, the gas turbine engine comprises charging means connected to the nozzle guide vanes and adapted to electrostically charge the nozzle guide vanes at a pre-determined polarity.

Such a charging leads to electrostatic or electromagnetic fields which can be used to redistribute the hot corrosive exhaust gas components, i.e. ions and free electrons, on the core of a vortex built up in the combustion chamber of a gas turbine engine due to the high swirl of the in-flowing fuel/air mixture. As a consequence of the vortex, the lifetime of the nozzle guide vanes is reduced. Since the vortex core will contain a reacting mixture - due to its short residence time - the reaction may be terminated or controlled as it nears the 1^{st} stage NGV assembly if the NGV's are electrostatically charged. This charging process will cause an electrical field to be generated in front of the NGV's which will in turn cause a redistribution of ions and free electrons within the vortex core reacting mixture.

In addition, the redistribution of ions and free electrons will also lead to changes to heat distribution. The changes to heat distribution within the vortex core will result in a change to the exit temperature traverse. This can be modulated to be of even greater benefit to the operational characteristics of the turbine assembly as a whole. Thus, the gas turbine engine efficiency can also be improved.

Advantageously, the charging means comprise an electric line connected to a charge supply and control unit. This is an easy and simple arrangement to supply electrostatic charges to nozzle guide vanes. Usually, the nozzle guide vanes comprise a metallic material which can be easily charged. Further, this arrangement allows the controlling of the charge supply and, as a consequence the controlling of the polarity of the nozzle guide vanes. Since the changes of the heat distribution within the vortex core will also influence the exit temperature traverse, they can be modulated so as to be of benefit for the operational characteristics of the gas turbine engine.

In an advantageous realisation of the inventive gas turbine engine the electric line is lead to the vane through its interior. Usually, a nozzle guide vane is formed of a hollow body. By arranging the line inside the cavity of the hollow body, the line is not exposed to the hot and corrosive medium existing in the combustion chamber, especially to the high temperature vortex and its components.

In a particular realisation, the gas turbine engine further comprises charging means adapted to electrostatically charge fuel injected by the swirler assembly. Thereby, the hot charging of the vortex core can be assisted. By electrostatically charging the fuel the fuel can be - depending on the polarity of the nozzle guide vanes - selectively directed to or away from the nozzle guide vanes. The charging means adapted to electrostatically charge the fuel may e.g. comprise an electrode.

The inventive method of operating a gas turbine engine, the components of which are described above, fuel and air are introduced in the combustion chamber through the swirler assembly so as to impose a high swirl to the fuel/air mixture, and the nozzle guide vanes are charged electrostatically at a pre-determined polarity.

By charging electrostatically the nozzle guide vanes, an electrical field is generated in front of them. The highly swirled mixture of fuel and air forms, after being ignited, a high temperature vortex within the combustion chamber of the gas turbine engine. The core of this vortex contains a reacting mixture comprising the fuel, air, and combustion products thereof. Ions and free-electrons contained in the vortex are redistributed within the vortex by the electrical field generated by the electrically charged nozzle guide vanes. The redistribution of the components of the vortex core leads to redistribution of the heat within the vortex and thus to a reduction of the temperature load on the nozzle guide vanes.

In an advantageous embodiment of the inventive method, the mixture of fuel and air is charged electrostatically. By electrostatically charging the fuel in addition to the electrostatic charging of the nozzle guide vanes, the heat redistribution within the vortex is assisted and therefore a faster mixing of the reacting mixture contained in the vortex, and as a consequence a faster reaction termination, is achieved.

To provide a thorough redistribution of the vortex resulted by the mixture of fuel, air, and combustion products thereof, the polarity of the mixture can be made dependent on the polarity of the nozzle guide vanes during operation of the gas turbine engine. That is, the electrostatic charge imparted to the mixture of fuel, air, and combustion products thereof is varied in dependence on the electrical field which is generated in front of the nozzle guide vanes.

The strength of the electrical field generated in front of the nozzle guide vanes can be varied depending on the operational characteristics of the gas turbine engine. Therefore, the polarity of the nozzle guide vanes is advantageously made dependent on the load conditions of the gas turbine engine.

The inventive gas turbine engine is particularly adapted to perform the inventive method.

Further features, properties and advantages of the present invention will become clear from the following description of embodiments of the invention in conjunction with the accompanying drawings.
Figure 1 schematically shows a longitudinal section of a gas turbine engine according to prior art; and
Figure 2 schematically shows a longitudinal section of a gas turbine engine according to the present invention.

The same or similar parts having the same or similar designation have the same reference numerals in all of the Figures.

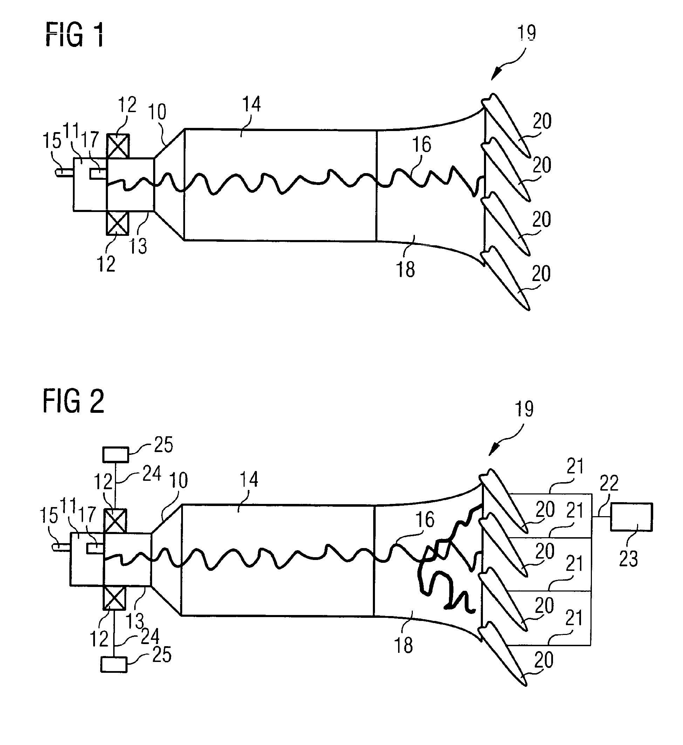

Figure 1 shows a longitudinal section of a gas turbine engine according to prior art. The combustor comprises in flow direction series a burner with a swirler portion 12 and a burner-head portion 11 attached to the swirler portion 12, a transition piece being referred as combustion pre-chamber 13 and a main combustion chamber 14. The main combustion chamber 14 has a diameter being larger than the diameter of the pre-chamber 13. The main combustion chamber 14 is connected to the pre-chamber 13 via a dome portion 10. In general, the transition piece 13 may be implemented as a one part continuation of the burner 11 towards the combustion chamber 14, as a one part continuation of the combustion chamber 14 towards the burner 11, or as a separate part between the burner 11 and the combustion chamber 14.

A fuel conduit 15 is provided for leading a gaseous or liquid fuel to the burner which is mixed with in-streaming air and fuel in the swirler 12. The fuel/air mixture, to which a high swirl is imposed by the swirler 12, is then ignited by an igniter 17 led towards the primary combustion zone 18 where it is burnt to form hot, pressurised exhaust gases streaming to a turbine stage 19. The turbine stage 19 comprises a plurality of nozzle guide vanes 20, four of which are shown in the figure. The hot, pressurised exhaust gases form a vortex 16 containing a reacting mixture comprising ions and free electrons. As shown, the vortex 16 attaches to the nozzle guide vanes 20.

Figure 2 schematically shows a longitudinal section of a gas turbine engine according to the present invention. For the general description of the gas turbine engine reference is made to Figure 1. At the turbine stage 19, there are arranged a plurality of stages of nozzle guide vanes 20. In Figure 2, four nozzle guide vanes 20 of the 1^{st} stage are shown. Within each nozzle guide vane 20 is arranged an electric line 22 which is connected to a charge supply and control unit 23. Optionally, the swirler 12 may comprise an electrode which can be charged electrostatically by a further charge supply and control unit 25 through an electric line 24.

Each nozzle guide vane 20 is formed of a hollow body with an internal cavity and comprises air openings (not shown) extending from the internal cavity through the wall of the hollow body. Cooling air flows through the internal cavity of the nozzle guide vane 20 and flows out through the openings to form a cooling film over the nozzle guide vane 20. The electric line 22 is arranged within the internal cavity of the nozzle guide vane 20 so as to be protected against the hot and corrosive exhaust gases in the combustion chamber and to be cooled by the air flowing through the body of the nozzle guide vane 20.

During operation of the gas turbine engine, fuel is injected by the fuel conduit 15. Further, fuel and air is injected by the swirlers 12. If present, the optional electrode charges the fuel/air mixture provided by the swirler. The charged fuel/air mixture is ignited by the igniter 17 so that a combustion flame forms in the combustion main chamber 14.

Successively fed air/fuel mixtures pass the combustion flame in the combustion main chamber 14. After having passed the combustion pre-chamber 13 and the combustion main chamber 14 as well as the primary combustion zone 18, the fuel/air mixture and combustion products thereof reach the turbine stage 19 and then the nozzle guide vanes 20. The highly swirled mixture of fuel, air and combustion products thereof produces a vortex 16 which would, if not counteracted, attach itself to the nozzle guide vanes and thus shorten the life of the nozzle guide vanes 20. By charging the nozzle guide vanes 20 the hot components of the vortex core, i.e. the ions and free electrons within the vortex core, are redistributed so that the heat is redistributed accordingly. This process is assisted by the optional charging of the fuel/air mixture.

The charge supply and control unit 23 and, if present the optional charge control and supply unit 25, may be adapted to control the polarity of the charge delivered to the nozzle guide vanes and optionally to the fuel air/mixture. If there are individual lines extending between each nozzle guide vane 20 and the charge supply and control unit 23 it is possible to individually charge the vanes. This offers the opportunity to actively control the redistribution of ions and electrons in the vortex 16 by modulating the charge delivered to each nozzle guide vane 20.

The modulation could also be used to improve machine efficiency by changing the exit temperature traverse through the heat distribution within the vortex core.

## Claims

1. A gas turbine engine, comprising
- a combustor, including a burner (11), a swirler assembly (12), and a combustion chamber (13, 14),
- a nozzle guide vane assembly comprising a plurality of nozzle guide vanes (20), and
- a charging means (22) connected to the nozzle guide vanes and adapted to electrostically charge the nozzle guide vanes (20) at a pre-determined polarity.

2. The gas turbine engine, as claimed in claim 1, wherein the charging means comprise an electric line (22) connected to a charge supply and control unit (23).

3. The gas turbine engine, as claimed in claim 2, wherein the lines (22) are lead through cavities of the nozzle guide vane (20).

4. The gas turbine engine, as claimed in any of preceding claims, comprising a further charging means adapted to electrostatically charge fuel and/or air supplied by the swirler assembly (12).

5. A method of operating a gas turbine engine, which comprises
- a combustor, the combustor including a burner (11), a swirler assembly (12), and a combustion chamber (13, 14),
- a nozzle guide vane assembly comprising a plurality of nozzle guide vanes (20),
wherein
- fuel and air are introduced into the combustion chamber (13, 14) with a high swirl, and
- the nozzle guide vanes (20) are charged electrostatically at a pre-determined polarity.

6. The method, as claimed in claim 5, wherein the fuel is charged electrostatically.

7. The method, as claimed in claim 6, wherein the polarity of the fuel is made dependent on the polarity of the nozzle guide vanes (20) during operation of the gas turbine engine.

8. The method, as claimed in claim 7, wherein the polarity of the nozzle guide vanes (20) is made dependent on the load conditions of the gas turbine engine.
